# EUROPÄISCHE PATENTSCHRIFT

(11) **EP 3 084 918 B1**
(45) Veröffentlichungstag und Bekanntmachung des Hinweises auf die Patenterteilung: **27.03.2019**
(21) Anmeldenummer: 14818872.5
(22) Anmeldetag: 11.12.2014
(51) Int. Cl.: H02J 7/34, H02J 7/00

(54) **ELEKTRISCHE ENERGIESPEICHERVORRICHTUNG MIT SYMMETRIERSCHALTUNG**
ELECTRICAL ENERGY STORAGE DEVICE HAVING A BALANCING CIRCUIT
DISPOSITIF DE STOCKAGE D'ÉNERGIE ÉLECTRIQUE COMPRENANT UN CIRCUIT D'ÉQUILIBRAGE

(30) Priorität: 18.12.2013 DE 102013021535
(43) Veröffentlichungstag der Anmeldung: 26.10.2016
(60) Teilanmeldung: 19156348.5
(73) Patentinhaber: Liebherr-Components Biberach GmbH, 88400 Biberach an der Riß (DE)
(72) Erfinder: SCHUSTER, Wolfgang, 88339 Bad Waldsee (DE); WELSER, Sven, 88437 Äpfingen (DE)
(74) Vertreter: Thoma, Michael
(86) Internationale Anmeldenummer: PCT/EP2014/003331
(87) Internationale Veröffentlichungsnummer: WO 2015/090544

(56) Entgegenhaltungen:
- WO-A1-2006/084797
- US-A1- 2012 212 056

## Beschreibung

Die vorliegende Erfindung betrifft eine elektrische Energiespeichervorrichtung mit einer Mehrzahl von in Reihe geschalteten, elektrischen Speicherzellen und eine induktiven Symmetrierschaltung zur Symmetrierung der Speicherzellenspannungen, wobei die Symmertrierschaltung einen Symmetriertransformator mit getrennten Einzelwicklungen für die Speicherzellen sowie jeweils einen elektrischen Schalter für jede Speicherzelle aufweist.

Um elektrische Maschinen, die stark veränderliche und zyklische Leistungsaufnahmen aufweisen, effizient betreiben zu können, ist es notwendig, Energiespeicher bereitzustellen, die hohe Energiemengen speichern und diese kurzfristig aufnehmen und abgeben können. Solche Anforderungen bestehen beispielsweise bei selbstfahrenden Arbeitsmaschinen, die elektrische Fahrantriebe umfassen, beispielsweise mobilen Baumaschinen, aber auch stationäre Anlagen, welche aufgrund stark wechselnder Leistungsaufnahme bisweilen nicht an das öffentliche Stromnetz anschließbar sind und einen eigenen Generator benötigen. Generell sind solche Energiespeicher jedoch auch für netzgebundene Maschinen mit elektrischen Antrieben sinnvoll, sofern diese eine stark veränderliche und zyklische Leistungsaufnahme aufweisen.

Elektrische Energiespeicherelemente wie Kondensatoren, die eine rasche Be- und Entladung ermöglichen, verfügen allerdings gemeinhin über einen begrenzten Energieinhalt, der für Anwendungen mit hohen zu speichernden Energiemengen nicht ausreicht. Es ist daher meist nötig, solche Energiespeicherelemente zu Speichermodulen zusammenzuschalten. Um hierbei hohe Spannungswerte erreichen zu können, müssen bei niedrigen Nennspannungswerten der Einzelelemente eine Vielzahl von Energiespeicherelementen in Reihe geschaltet werden.

Insbesondere beim Aufladen von in Reihe geschalteten, elektrischen Energiespeicherelementen muss jedoch gewährleistet sein, dass kein einziges der Energiespeicherelemente spannungsmäßig überlastet wird. Sowohl bei Akkumulatoren als auch Kondensatoren kann die Gefahr einer Überlastung eines einzelnen Elements bestehen, wenn dieses beim Aufladen bereits auf die Nennspannung aufgeladen ist, andere Elemente jedoch noch deutlich von ihrer Nennspannung entfernt sind und deshalb noch weiter aufgeladen werden.

An sich besonders leistungsfähig, aber auch mit einer recht kleinen Nennspannung versehen sind Doppelschichtkondensatoren, die kein elektrisch isolierendes Dielektrikum enthalten, sondern zwischen ihren beiden Elektroden üblicherweise einen Elektrolyten aufweisen. Die Speicherung der elektrischen Energie erfolgt hier durch Ladungsverschiebung an den Grenzflächen, wodurch große Kapazitätswerte erzielt werden, gleichzeitig aber die zulässige Spannung auf wenige Volt beschränkt ist. Wird ein Energiespeicher aus mehreren solchen Kondensatoren aufgebaut, die in Reihe geschaltet sind, darf kein einzelner Kondensator sein zulässiges Spannungsmaximum überschreiten, da es anderenfalls zu irreversiblen Veränderungen des Elektrolyten kommen würde.

Um den zulässigen Energieinhalt der Speicherelemente möglichst auszuschöpfen, andererseits aber eine Überladung bzw. Überspannungen zu vermeiden, können Symmetrierschaltungen Verwendung finden. Werden die Speicherzellenspannungen eines Speicherblocks symmetriert, altern die Speicherzellen in gleicher Weise und der Block erhält auf diese Weise seine längste Lebensdauer. Bei vollgeladenen Doppelschichtkondensator-Speicherzellen kann schon eine zusätzliche Spannung von nur 0,1 V die Lebensdauer halbieren.

Für solche Symmetrierschaltungen gibt es unterschiedliche Ansätze. Zunächst unterscheidet man zwischen passiven Lösungen und aktiven Lösungen. Während bei passiven Lösungen bei zu hoher Zellenspannung Energie in Wärme umgewandelt und die Zellenspannung somit erniedrigt wird, können aktive Lösungen einen Ladungsausgleich zwischen den Zellen mit niedriger Spannung und denen mit hoher Spannung herbeiführen.

Solche aktiven Lösungen gibt es mit kapazitiven oder induktiven Schaltungsbauteilen. Bei kapazitiven Verfahren wird üblicherweise ein Kondensator über die Zelle mit der höchsten Spannung geschaltet, wobei dieser Kondensator dann über die Zelle mit der niedrigsten Spannung gelegt wird. Bei den induktiven Lösungen wird über viele Einzeltransformatoren oder einen gemeinsamen Transformator mit vielen Windungen eine Symmetrierung hergestellt.

Verschiedene vorbekannte Symmetrierschaltungen für in Reihe geschaltete Speicherzellen sind beispielsweise aus den Schriften DE 100 39 407 A1, DE 10 2005 034 588 A1, DE 10 2009 041 005 A1 oder DE 10 2008 048 382 A1 bekannt.

Bei den genannten induktiven, aktiven Symmetrierschaltungen, die mit induktiven Bauteilen einen Ladungsausgleich zwischen den Zellen mit niedriger Spannung und den Zellen mit hoher Spannung herbeiführen, sind die bisherigen Lösungen in verschiedener Hinsicht verbesserungsfähig. Wird aufgrund des hohen Preises vieler Einzeltransformatoren nur ein gemeinsamer Symmetriertransformator für die in Reihe geschalteten Speicherzellen verwendet, wird üblicherweise neben den vielen Einzelwicklungen, je eine pro Speicherzelle, eine weitere gemeinsame Wicklung vorgesehen, welche mit der Ausgangsspannung des Speicherblocks verschaltet ist.

Dabei kann aus der Summenspannung des Speicherblocks heraus Energie entnommen und ein Schaltnetzteil beispielsweise in Form eines Flybacks gebaut werden, welches die eingespeicherte Energie über Dioden in jede Einzelzelle einspeichert. Die Dioden können erreichen, dass die Zelle mit der niedrigsten Spannung am meisten von dieser Energie erhält, so dass ein Ausgleich herbeigeführt wird. Andererseits kann auch mit der Energie der Speicherzellen heraus ein Schaltnetzteil gebaut werden, wobei das induktive Ausspeichern zentral in eine Summenschiene eingespeist wird. In diesem Fall trägt die Speicherzelle mit der höchsten Spannung am meisten zum Stromfluss bei, so dass deren Spannung erniedrigt wird. Dabei muss der Transformator ebenfalls neben den Einzelwicklungen eine weitere Wicklung aufweisen, welche eine Windungszahl besitzt, die sich aus der Windungszahl der Einzelwicklung mal der Anzahl der Speicherzellen berechnet.

In beiden Fällen benötigt der gemeinsame Symmetriertransformator neben den n Wicklungen für die n Speicherzellen noch eine zusätzliche Wicklung mit einer hohen Windungszahl, die für eine jeweils bestimmte Anzahl von Zellen zu berechnen ist und sich ändert, wenn eine andere Anzahl von Zellen verwendet wird.

Aus der Schrift US 2012/212056 A1 ist eine Brückenschaltung bekannt, bei der mehrere in Reihe geschaltete Speicherzellen und eine induktive Symmetrierschaltung zur Symmetrierung der Speicherzellenspannungen vorgesehen sind. Ferner zeigt die Schrift WO 2006/084797 ein Schaltnetzteil, dessen Leistungsteil im Stand-by-Betrieb abgeschaltet wird, wobei die benötigte sekundärseitige Hilfsenergie ausschließlich über Hilfswicklungen eines Transformators übertragen wird.

Bei den genannten Verfahren, welche Energie aus den Speicherzellen heraus über einen gemeinsamen Transformator in andere Zellen oder in eine Summenschiene transportieren, ist üblicherweise der Ausgleichsstromfluss nicht limitiert. Dies führt jedoch dazu, dass der Strom einen nicht definierten, hohen Wert annehmen kann, welcher von der Spannungsdifferenz der Einzelzellen abhängt. Dementsprechend muss der elektronische Schalter für die Einzelzelle, insbesondere der entsprechende Transistor sehr groß dimensioniert werden, da sein maximaler Strom nicht festgelegt ist. Ferner benötigen auch die Kabel von der Symmetrierschaltung zu den Anzapfungen des Speicherblocks einen höheren Querschnitt. Die Stecksysteme werden teurer.

Hiervon ausgehend liegt der vorliegenden Erfindung die Aufgabe zugrunde, eine verbesserte elektrische Energiespeichervorrichtung der eingangs genannten Art zu schaffen, die Nachteile des Standes der Technik vermeidet und Letzteren in vorteilhafter Weise weiterbildet. Insbesondere soll eine effiziente, einfach aufgebaute induktive Symmetrierschaltung geschaffen werden, deren Symmetriertransformator einen einfachen und kostengünstigen Aufbau besitzt und deren Schalter einfach ansteuerbar sind und nur geringen Energiemengen ausgesetzt sind.

Erfindungsgemäß wird die genannte Aufgabe durch eine elektrische Energiespeichervorrichtung gemäß Anspruch 1 gelöst. Bevorzugte Ausgestaltungen der Erfindung sind Gegenstand der abhängigen Ansprüche.

Erfindungsgemäß ist also vorgesehen, dass die Wicklungen des Symmetriertransformators über jeweils zumindest eine Induktivität und einen mit der genannten Induktivität verbundenen Schalter mit einem Pol der jeweiligen Speicherzelle verbunden ist, wobei der einer jeweiligen Speicherzelle zugeordnete Schalter über eine Diode an einen Pol einer jeweils vor- oder nachgeordneten Speicherzelle angebunden ist. Über die genannten Dioden können Ausgleichsströme begrenzt und die Schalter mit limitierten Strömen bzw. Spannungen betrieben werden.

Insbesondere können dabei in Weiterbildung der Erfindung die einer jeweiligen Speicherzelle zugeordneten Schaltungsbauteile umfassend einen elektrischen Schalter, die potentialgetrennte Wicklung des Symmetriertransformators, eine Induktivität und eine Diode so miteinander verbunden sein, dass ein erster Anschluss der genannten Wicklung jeweils mit dem Pluspol der zugehörigen Speicherzelle verbunden ist, ein zweiter Anschluss der genannten Wicklung mit einem ersten Anschluss der Induktivität verbunden ist, der zweite Anschluss der Induktivität mit einem ersten Anschluss des vorgenannten Schalters verbunden ist, der zweite Anschluss des Schalters mit dem Minuspol der zugehörigen Speicherzelle verbunden ist, die Anode der vorgenannten Diode mit dem ersten Anschluss des Schalters verbunden ist und die Kathode der Diode mit dem Pluspol derjenigen Speicherzelle verbunden ist, welche in der Reihenschaltung in Plusrichtung als nächstes folgt. Die mit dem Schalter einer ersten Speicherzelle verbundene Diode kann also mit dem Pluspol der zweiten Speicherzelle verbunden sein, die in Plusrichtung als nächstes auf die erste Speicherzelle folgt. Grundsätzlich käme es auch in Betracht, bei der Anbindung der Diode eine oder mehrere Speicherzellen zu überspringen, also die an den Schalter der ersten Speicherzelle angebundene Diode mit dem Pluspol der dritten oder vierten Speicherzelle zu verbinden. Die vorgenannte Anbindung an die unmittelbar nächste Speicherzelle in Plusrichtung erlaubt jedoch eine einfachere Verschaltung und einen gleichmäßigeren Spannungsausgleich.

Gemäß einer anderen Weiterbildung der Erfindung kann in der Reihenschaltung von Transformatorwicklung und Induktivität die Reihenfolge vertauscht sein, insbesondere derart, dass die Induktivität mit dem ersten Anschluss jeweils mit dem Pluspol der zugehörigen Speicherzelle verbunden ist und der zweite Anschluss der Transformatorwicklung mit dem ersten Anschluss des Schalters verbunden ist.

Bei der obersten Speicherzelle, welche mit dem Pluspol des Speicherblocks verbunden ist, und zwar insbesondere direkt ohne Zwischenschaltung weiterer Speicherzellen, kann die Induktivität als Speicherdrossel ausgeführt sein, wobei die genannte Speicherdrossel zwei gleiche Wicklungen umfassen kann. Vorteilhafterweise kann dabei eine erste Wicklung dieser Speicherdrossel entsprechend den Induktivitäten in den anderen Speicherzellen angeschlossen sein, während die zweite Wicklung der genannten Speicherdrossel vorteilhafterweise in Reihe mit einer weiteren Diode jeweils zum Plus- und Minusanschluss der untersten Speicherzelle führt, die am Minusanschluss des Speicherblock anliegt. Vorteilhafterweise kann dabei die Kathode dieser weiteren Diode zum Pluspol der unteren Speicherzelle zeigen.

Vorteilhafterweise kommt die Symmetrierschaltung mit nur einem Symmetriertransformator aus, der allen Speicherzellen gemeinsam zugeordnet ist, wobei der genannte Transformator nur Wicklungen mit der gleichen Windungsanzahl aufweisen kann, wobei die Wicklung vorteilhafterweise mit einem handelsüblichen Flachbandkabel ausgeführt werden kann. Für eine Anordnung von n - beispielsweise 24 - Speicherzellen werden n - beispielsweise dann 24 - getrennte Wicklungen vorgesehen, was mit einem entsprechenden n-poligen - beispielsweise 24-poligen - Flachbandkabel leicht und kostengünstig realisiert sein kann.

In Weiterbildung der Erfindung kann der Symmetriertransformator aus einem Transformatorkern, um den Windungen einer Flachbandleitung gewickelt sind, gebildet sein. Vorteilhafterweise kann jede Ader der Flachbandleitung eine galvanisch getrennte bzw. potentialgetrennte Wicklung auf dem Symmetriertransformator bilden.

Vorteilhafterweise kann eine solche Flachbandleitung des Symmetriertransformators mit herkömmlichen Flachbandsteckern auf eine Leiterplatte, an der weitere Bauteile der Symmetrierschaltung vorgesehen sind, geführt und angebunden bzw. kontaktiert sein.

Vorteilhafterweise kann der genannte Symmetriertransformator mehrere solcher Wickel mit Flachbandleitungen besitzen.

Der Kern des Symmetriertransformators kann in Weiterbildung der Erfindung zumindest teilweise aus einem hochpermeablen ferritischen Material bestehen. In Weiterbildung der Erfindung kann der Kern des Symmetriertransformators zumindest teilweise aus nanokristallinem und/oder amorphen ferritischen Materialien bestehen.

Hinsichtlich der den Speicherzellen zugeordneten Schalter kann in vorteilhafter Ausbildung der Erfindung vorgesehen sein, dass pro Speicherzelle nur ein Schalter vorgesehen ist.

Die elektrischen Schalter können dabei grundsätzlich verschieden ausgebildet sein. In Weiterbildung der Erfindung ist zumindest einer der elektrischen Schalter als Transistor ausgeführt, wobei in Weiterbildung der Erfindung alle elektrischen Schalter als Transistoren ausgeführt sein können.

In Weiterbildung der Erfindung kann zumindest einer insbesondere auch jeder elektrische Schalter als MOSFET oder IGBT-Transistor ausgebildet sein.

Eine weitere vorteilhafte Ausbildung der Erfindung kann darin bestehen, dass zumindest einer, insbesondere jeder elektrische Schalter als bipolarer NPN-Transistor mit einer antiparallelen Diode ausgeführt ist.

In Weiterbildung der Erfindung kann für mehrere, vorzugsweise alle elektrischen Schalter, die den Speicherzellen zugeordnet sind, eine einheitliche Ansteuerung vorgesehen sein, die insbesondere in Form nur einer einzigen Ansteuerschaltung realisiert sein kann.

Gemäß der Erfindung können die Steueranschlüsse aller elektrischer Schalter mit einem gleichförmigen Signal beaufschlagt werden, derart, dass alle Schalter in synchroner Weise gleichzeitig einschalten und/oder gleichzeitig ausschalten.

Vorteilhafterweise kann zur Ansteuerung aller Steueranschlüsse nur eine Impulsgeneratorschaltung verwendet sein.

Die Ansteuerung der elektrischen Schalter kann potentialmäßig bzw. galvanisch über einen Gatetransformator und/oder über Optokoppler vom Speicherblock getrennt sein.

Auf der Seite der Speicherelemente kann auf Komparatoren, Operationsverstärker oder andere Ansteuerschaltungsbauteile verzichtet werden.

Die Erfindung wird nachfolgend anhand eines Ausführungsbeispiels und einer zugehörigen Zeichnung näher dargestellt. In der Zeichnung zeigt:

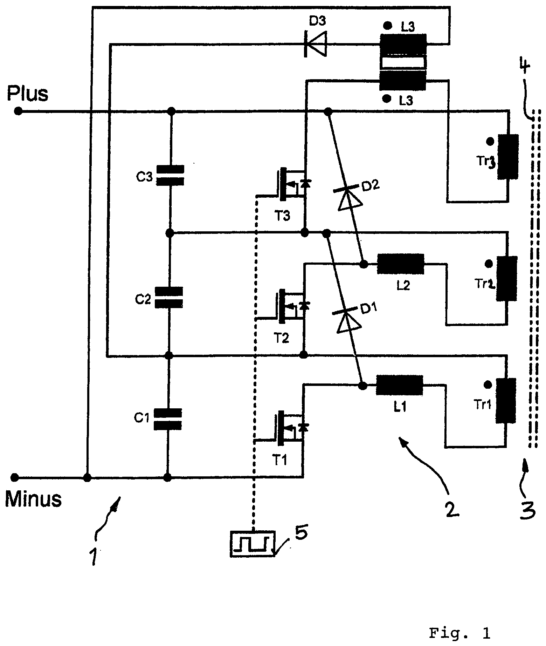

- Fig. 1:: eine schematische Darstellung eines elektrischen Energiespeichersystems mit mehreren in Reihe geschalteten Speicherzellen in Form von Kondensatoren sowie einer induktiven Symmetrierschaltung zum Symmetrieren der Speicherzellenspannungen nach einer vorteilhaften Ausführung der Erfindung.

Wie Fig. 1 zeigt, kann ein Energiespeicher 1 bzw. ein Energiespeichermodul mehrere Speicherzellen C1, C2 und C3 umfassen, die in Reihe bzw. Serie geschaltet sind und mit einem gemeinsamen Minuspol und einem gemeinsamen Pluspol des Energiespeichers 1 verbunden sind. Die Speicherzelle C1 ist dabei unmittelbar an den Minuspol angebunden, während die Speicherzelle C3 am nächsten zum Pluspol des Energiespeichers 1 liegt.

Auch wenn Fig. 1 nur drei Speicherzellen C1, C2 und C3 zeigt, versteht es sich, dass der Energiespeicher 1 eine beliebige Anzahl, insbesondere eine Vielzahl solcher Speicherzellen C1 ... Cn umfassen kann, die in Reihe zueinander geschaltet sind.

Wie Fig. 1 zeigt, ist den in Reihe geschalteten Speicherzellen C1, C2 und C3 eine Symmetrierschaltung 2 zugeordnet, die einen für alle Speicherzellen gemeinsamen Symmetriertransformator 3 umfasst, der eine der Speicherzellenanzahl entsprechende Anzahl - im Ausführungsbeispiel nach Fig. 1 drei - galvanisch getrennte Wicklungen Tr1, Tr2 und Tr3 umfasst. Die genannten Wicklungen Tr1 ... Tr3 können dabei in Form einer Flachbandleitung ausgebildet sein, die um einen Transformatorkern 4 gewickelt ist. Die Adern der genannten Flachbandleitung bilden die separaten Wicklungen, welche den Speicherzellen zugeordnet sind.

Wie Fig. 1 zeigt, kann jede der Wicklungen Tr1, Tr2 und Tr3 mit jeweils einem ersten Anschluss mit dem Pluspol der jeweils zugeordneten Speicherzelle C1, C2 und C3 verbunden sein, während der jeweils zweite Anschluss der genannten Transformatorwicklung Tr1, Tr2 oder Tr3 mit einem ersten Anschluss einer Induktivität L1, L2 und L3 verbunden ist, die ebenfalls jeweils einer der genannten Speicherzellen C1, C2 und C3 zugeordnet sind. Die genannten Induktivitäten L1, L2 und L3 können dabei, wie Fig. 1 zeigt, jeweils mit ihrem ersten Anschluss mit einer der genannten Wicklungen Tr1, Tr2 und Tr3 verbunden sein, während der zweite Anschluss der jeweiligen Induktivität L1, L2 und L3 mit dem ersten Anschluss eines elektrischen Schalters T1, T2 bzw. T3 verbunden ist, wobei jeweils ein solcher Schalter T1, T2 und T3 der jeweiligen Speicherzelle C1, C2 oder C3 zugeordnet ist. Insbesondere kann der zweite Anschluss eines jeden Schalters T1, T2 und T3 mit dem Minuspol der jeweils zugeordneten Speicherzelle C1, C2 bzw. C3 verbunden sein, vgl. Fig. 1.

In der Reihenschaltung von Wicklung Tr1, Tr2 und Tr3 und der Induktivität L1, L2 und L3 kann dabei die Reihenfolge vertauscht sein, derart, dass die Induktivität L1, L2 und L3 jeweils mit dem ersten Anschluss mit dem Pluspol der zugehörigen Speicherzelle C1, C2 und C3 verbunden ist, während der zweite Anschluss der Wicklung Tr1, Tr2 und Tr3 mit dem ersten Anschluss des Schalters T1, T2 und T3 verbunden ist.

Wie Fig. 1 zeigt, kann eine einheitliche Ansteuerung für die genannten Schalter T1, T2 und T3 vorgesehen sein, wobei insbesondere eine für alle Schalter T1, T2 und T3 gemeinsame Impulsgeneratorschaltung 5 vorgesehen sein kann, die alle elektrischen Schalter T1, T2 und T3 mit einem gleichförmigen Signal beaufschlagt, so dass alle Schalter T1, T2 und T3 in synchroner Weise gleichzeitig einschalten und auch gleichzeitig ausschalten.

Bei der obersten Speicherzelle C3, welche mit dem Pluspol des Speicherblocks 1 verbunden ist, kann die Induktivität L3 als Speicherdrossel mit zwei vorzugsweise gleichen Wicklungen ausgeführt sein, wobei die erste Wicklung dieser Speicherdrossel so angeschlossen sein kann, wie die anderen Induktivitäten L1 und L2 in den anderen Speicherzellen C1 und C2, der erste Anschluss der Induktivität mit der Wicklung und der zweite Anschluss der Induktivität mit dem Schalter T3 verbunden ist (oder eben in der vorgenannten umgedrehten Weise). Die zweite Wicklung der genannten Speicherdrossel L3 kann in Reihe mit einer weiteren Diode D3 jeweils zum Plus- und Minusanschluss der untersten Speicherzelle C1 führen, welche am Minusanschluss des Energiespeichers 1 anliegt, wobei die Kathode dieser weiteren Diode D3 zum Pluspol der unteren Speicherzelle zeigt.

Wie Fig. 1 zeigt, kann die Symmetrierschaltung 2 Dioden D1, D2 umfassen, die jeweils für eine zugeordnete Speicherzelle C1 und C2 vorgesehen sind, wobei die Anode der jeweiligen Diode D1, D2 vorteilhafterweise mit dem ersten Anschluss des vorgenannten Schalters T1, T2 der zugehörigen Speicherzelle C1, C2 verbunden ist, während die Kathode der Diode D1, D2 mit dem Pluspol der zugehörigen Speicherzelle C1, C2 verbunden sein kann, welche in der Reihenschaltung in Plusrichtung als nächstes folgt, vgl. Fig. 1.

## Patentansprüche

1. Elektrische Energiespeichervorrichtung mit einer Mehrzahl von in Reihe geschalteten, elektrischen Speicherzellen (C1, C2, C3) und einer induktiven Symmetrierschaltung (2) zur Symmetrierung der Speicherzellenspannungen, wobei die Symmetrierschaltung (2) einen Symmetriertransformator (3) mit potentialgetrennten Wicklungen (Tr1, Tr2, Tr3) für die Speicherzellen (C1, C2, C3) sowie jeweils einen elektrischen Schalter (T1, T2, T3) für jede Speicherzelle (C1, C2, C3) aufweist, wobei die potentialgetrennten Wicklungen (Tr1, Tr2, Tr3) des Symmetriertransformators (3) über jeweils zumindest eine Induktivität (L1, L2, L3) und einen mit der genannten Induktivität (L1, L2, L3) verbundenen Schalter (T1, T2, T3) mit einem Pol der jeweiligen Speicherzelle (C1, C2, C3) verbunden sind, wobei jeder der einer jeweiligen Speicherzelle (C1, C2, C3) zugeordnete Schalter (T1, T2, T3) über eine Diode (D1, D2, D3) an einen Pol einer jeweils vor- oder nachgeordneten Speicherzelle (C1, C2, C3) angebunden ist, **dadurch gekennzeichnet, dass** die Steueranschlüsse aller elektrischen Schalter (T1, T2, T3) mit einem gleichförmigen Steuersignal beaufschlagt werden, so dass alle Schalter (T1, T2, T3) in synchroner Weise gleichzeitig einschalten und/oder gleichzeitig ausschalten.

2. Elektrische Energiespeichervorrichtung nach Anspruch 1, wobei die der jeweiligen Speicherzelle (C1, C2, C3) zugeordneten Symmetrierschaltungsbauteile umfassend einen elektrischen Schalter (T1, T2, T3), eine potentialgetrennte Wicklung (Tr1, Tr2, Tr3) des Symmetriertransformators (3), eine Induktivität (L1, L2 und L3) und eine Diode (D1, D2, D3) derart miteinander verbunden sind, dass ein erster Anschluss der potentialgetrennten Wicklung mit dem Pluspol der Speicherzelle verbunden ist, ein zweiter Anschluss der potentialgetrennten Wicklung mit einem ersten Anschluss der Induktivität verbunden ist, der zweite Anschluss der Induktivität mit einem ersten Anschluss des Schalters verbunden ist, ein zweiter Anschluss des Schalters mit dem Minuspol der Speicherzelle verbunden ist, die Anode der Diode mit dem genannten ersten Anschluss des Schalters verbunden ist und die Kathode der Diode mit dem Pluspol der Speicherzelle verbunden ist, welche in der Reihenschaltung der Speicherzellen in Plusrichtung als nächstes folgt.

3. Elektrische Energiespeichervorrichtung nach Anspruch 2, wobei in der Reihenschaltung von potentialgetrennter Wicklung und Induktivität die Reihenfolge vertauscht ist derart, dass die Induktivität mit dem ersten Anschluss mit dem Pluspol der Speicherzelle verbunden ist und der zweite Anschluss der potentialgetrennten Wicklung mit dem ersten Anschluss des Schalters verbunden ist.

4. Elektrische Energiespeichervorrichtung nach einem der vorhergehenden Ansprüche, wobei bei einer obersten Speicherzelle (C3), welche mit dem Pluspol des Energiespeichers (1) verbunden ist, die Induktivität (L3) als Speicherdrossel mit zwei vorzugsweise gleichen Wicklungen ausgebildet ist, wobei die erste Wicklung der genannten Speicherdrossel zwischen der potentialgetrennten Wicklung (Tr3) des Symmetriertransformators (3) und dem elektrischen Schalter (T3), die der obersten Speicherzelle (C3) zugeordnet sind, angeordnet und mit einem Anschluss mit der potentialgetrennten Wicklung und mit dem anderen Anschluss mit dem genannten Schalter verbunden ist, während die zweite Wicklung der genannten Speicherdrossel (L3) in Reihe mit einer Diode (D3) jeweils zum Plus- und Minusanschluss der Speicherzelle (C1) führt, welche am Minusanschluss des Speicherblocks (1) angeschlossen ist, wobei die Kathode dieser Diode (D3) zum Pluspol der am Minusanschluss angeschlossenen Speicherzelle (C1) zeigt.

5. Elektrische Energiespeichervorrichtung nach einem der vorhergehenden Ansprüche, wobei die elektrischen Schalter (T1, T2, T3) als Transistoren ausgebildet sind.

6. Elektrische Energiespeichervorrichtung nach einem der vorhergehenden Ansprüche, wobei die elektrischen Schalter (T1, T2, T3) als MOSFET oder IGBT-Transistoren ausgebildet sind.

7. Elektrische Energiespeichervorrichtung nach einem der vorhergehenden Ansprüche, wobei die elektrischen Schalter (T1, T2, T3) als bipolare NPN-Transistoren mit einer antiparallelen Diode ausgeführt sind.

8. Elektrische Energiespeichervorrichtung nach einem der vorhergehenden Ansprüche, wobei für alle elektrischen Schalter (T1, T2, T3) eine einheitliche Ansteuerung durch nur eine einzige Ansteuerschaltung in Form einer Impulsgeneratorschaltung (5) zur Ansteuerung aller elektrischen Schalter (T1, T2, T3) vorgesehen ist.

9. Elektrische Energiespeichervorrichtung nach einem der vorhergehenden Ansprüche, wobei die Ansteuerung der elektrischen Schalter (T1, T2, T3) galvanisch über einen Gatetransformator und/oder über Optokopplerschaltungen von den Speicherzellen (C1, C2, C3) getrennt sind.

10. Elektrische Energiespeichervorrichtung nach einem der vorhergehenden Ansprüche, wobei der Symmetriertransformator (3) einen Transformatorkern (4) umfasst, um den Windungen einer Flachbandleitung gewickelt sind, deren Adern getrennte Wicklungen (Tr1, Tr2, Tr3) auf dem Symmetriertransformator (3) bilden, wobei die Flachbandleitung mit Flachbandsteckern auf eine Leiterplatte, die weitere Symmetrierbausteine der Symmetrierschaltung (2) aufweist, verbunden und kontaktiert ist, wobei der Symmetriertransformator (3) mehrere Wickel mit Flachbandleitungen aufweist.

11. Elektrische Energiespeichervorrichtung nach einem der vorhergehenden Ansprüche, wobei der Transformatorkern (4) des Symmetriertransformators (3) zumindest teilweise aus einem hochpermeablen ferritischen Material und/oder zumindest teilweise aus nanokristallinen und/oder amorphen ferritischen Materialien besteht.

12. Elektrische Energiespeichervorrichtung nach einem der vorhergehenden Ansprüche, wobei jeder Speicherzelle (C1, C2, C3) nur ein elektrischer Schalter (T1, T2, T3) zugeordnet ist und die Ansteuerung der Symmetrierschaltung auf Seiten der Speicherzellen (C1, C2, C3) frei von Komparatoren und Operationsverstärkern ausgebildet ist.

13. Elektrische Energiespeichervorrichtung nach einem der vorhergehenden Ansprüche, wobei die Symmetrierschaltung (2) nur den genannten einen Symmetriertransformator (3) umfasst, der allen Speicherzellen (C1, C2, C3) gemeinsam zugeordnet ist.

14. Elektrische Energiespeichervorrichtung nach einem der vorhergehenden Ansprüche, wobei jeder Speicherzelle (C1, C2, C3) nur eine Induktivität (L1, L2, L3) zugeordnet ist und/oder für jede Speicherzelle (C1, C2, C3) jeweils nur eine Diode (D1, D2, D3) vorgesehen ist.

## Claims

1. An electrical energy storage apparatus having a plurality of electrical storage cells (C1, C2, C3) connected in series and having an inductive balun (2) for balancing the storage cell voltages, wherein the balun (2) has a balancer transformer (3) having potential-separated coils (Tr1, Tr2, T3) for the storage cells (C1, C2, C3) and has a respective electric switch (T1, T2, T3) for each storage cell (C1, C2, C3), wherein the potential-separated coils (Tr1, Tr2, Tr3) of the balancer transformer (3) are connected via at least one respective inductance (L1, L2, L3) and via a switch (T1, T2, T3) connected to the named inductance (L1, L2, L3) to a pole of the respective storage cell (C1, C2, C3), with each switch (T1, T2, T3) associated with a respective storage cell (C1, C2, C3) being connected via a diode (D1, D2, D3) to a pole of a respective storage cell (C1, C2, C3) arranged upstream or downstream, **characterized in that** the control terminals of all the electric switches (T1, T2, T3) are acted on by a constant control signal so that all the switches (T1, T2, T3) switch on simultaneously and/or switch off simultaneously in a synchronous manner.

2. An electrical energy storage apparatus in accordance with claim 1, wherein the balun components associated with the respective storage cell (C1, C2, C3) and comprising an electric switch (T1, T2, T3), a potential-separated coil (Tr1, Tr2, Tr3) of the balancer transformer (3), an inductance (L1, L2 and L3) and a diode (D1, D2, D3) are connected to one another such that a first terminal of the potential-separated coil is connected to the positive pole of the storage cell, a second terminal of the potential-separated coil is connected to a first terminal of the inductance, the second terminal of the inductance is connected to a first terminal of the switch, a second terminal of the switch is connected to the negative pole of the storage cell, the anode of the diode is connected to the named first terminal of the switch and the cathode of the diode is connected to the positive pole of the storage cell which follows as the next in the positive direction in the series connection of the storage cells.

3. An electrical energy storage apparatus in accordance with claim 2, wherein the order in the series connection of the potential-separated coil and the inductance is swapped over such that the first terminal of the inductance is connected to the positive pole of the storage cell and the second terminal of the potential-separated coil is connected to the first terminal of the switch.

4. An electrical energy storage apparatus in accordance with one of the preceding claims, wherein, in a topmost storage cell (C3) which is connected to the positive pole of the energy store (1), the inductance (L3) is configured as a storage choke having two coils which are preferably the same, wherein the first coil of the named storage choke is arranged between the potential-separated coil (Tr3) of the balancer transformer (3) and the electric switch (T3), which are associated with the topmost storage cell (C3), and is connected at a terminal to the potential-separated coil and at the other terminal to the named switch, while the second coil of the named storage choke (L3) respectively leads in series with a diode (D3) to the positive terminal and to the negative terminal of the storage cell (C1) which is connected to the negative terminal of the storage block (1), wherein the cathode of this diode (D3) faces toward the positive pole of the storage cell (C1) connected at the negative terminal.

5. An electrical energy storage apparatus in accordance with one of the preceding claims, wherein the electric switches (T1, T2, T3) are configured as transistors.

6. An electrical energy storage apparatus in accordance with one of the preceding claims, wherein the electric switches (T1, T2, T3) are configured as MOSFET or IGBT transistors.

7. An electrical energy storage apparatus in accordance with one of the preceding claims, wherein the electric switches (T1, T2, T3) are designed as bipolar NPN transistors having an anti-parallel diode.

8. An electrical energy storage apparatus in accordance with one of the preceding claims, wherein a uniform control by only a single control circuit is provided for all the electric switches (T1, T2, T3) in the form of a pulse generator circuit (5) for controlling all the electric switches (T1, T2, T3).

9. An electrical energy storage apparatus in accordance with one of the preceding claims, wherein the control of the electric switches (T1, T2, T3) is galvanically separated from the storage cells (C1, C2, C3) via a gate transformer and/or via optocoupler circuits.

10. An electrical energy storage apparatus in accordance with one of the preceding claims, wherein the balance transformer (3) comprises a transformer core (4) around which the windings of a ribbon line are wound whose leads form separate coils (Tr1, Tr2, Tr3) on the balancer transformer (3), wherein the ribbon line is connected and contacted with ribbon plugs on a printed circuit board which has further balance components of the balun (2), wherein the balancer transformer (3) has a plurality of coils with ribbon lines.

11. An electrical energy storage apparatus in accordance with one of the preceding claims, wherein the transformer core (4) of the balancer transformer (3) at least partly comprises a highly permeable ferrite material and/or at least partly comprises nano-crystalline and/or amorphous ferrite materials.

12. An electrical energy storage apparatus in accordance with one of the preceding claims, wherein only one electric switch (T1, T2, T3) is associated with each storage cell (C1, C2, C3) and the control of the balun is free of comparators and operation amplifiers on the sides of the storage cells (C1, C2, C3).

13. An electrical energy storage apparatus in accordance with one of the preceding claims, wherein the balun (2) only comprises the named one balancer transformer (3) which is associated with all storage cells (C1, C2, C3) together.

14. An electrical energy storage apparatus in accordance with one of the preceding claims, wherein only one inductance (L1, L2, L3) is associated with each storage cell (C1, C2, C3) and/or only one respective diode (D1, D2, D3) is provided for each storage cell (C1, C2, C3).

## Revendications

1. Dispositif de stockage d'énergie électrique comprenant une pluralité d'éléments de stockage (C1, C2, C3) électriques branchés en série et un circuit d'équilibrage (2) inductif pour l'équilibrage des tensions des éléments de stockage, le circuit d'équilibrage (2) comportant un transformateur de symétrisation (3) doté d'enroulements (Tr1, Tr2, Tr3) à isolation galvanique pour les éléments de stockage (C1, C2, C3) ainsi que respectivement un commutateur (T1, T2, T3) électrique pour chaque élément de stockage (C1, C2, C3), les enroulements (Tr1, Tr2, Tr3) à isolation galvanique du transformateur de symétrisation (3) étant reliés à un pôle de l'élément de stockage (C1, C2, C3) respectif par le biais respectivement d'au moins une inductance (L1, L2, L3) et d'un commutateur (T1, T2, T3) relié à ladite inductance (L1, L2, L3), chacun des commutateurs (T1, T2, T3) associé à un élément de stockage (C1, C2, C3) respectif étant raccordé à un pôle d'un élément de stockage (C1, C2, C3) respectivement placé en amont ou en aval par le biais d'une diode (D1, D2, D3), **caractérisé en ce que** les raccordements de commande de tous les commutateurs (T1, T2, T3) électriques reçoivent un signal de commande uniforme, de sorte que tous les commutateurs (T1, T2, T3) établissent le contact simultanément et/ou coupent le contact simultanément de manière synchrone.

2. Dispositif de stockage d'énergie électrique selon la revendication 1, dans lequel les composants du circuit d'équilibrage associés à l'élément de stockage (C1, C2, C3) respectif, comprenant un commutateur (T1, T2, T3) électrique, un enroulement (Tr1, Tr2, Tr3) à isolation galvanique du transformateur de symétrisation (3), une inductance (L1, L2 et L3) et une diode (D1, D2, D3), sont reliés les uns aux autres de telle manière qu'une première borne de l'enroulement à isolation galvanique est reliée au pôle positif de l'élément de stockage, une seconde borne de l'enroulement à isolation galvanique est reliée à une première borne de l'inductance, la seconde borne de l'inductance est reliée à une première borne du commutateur, une seconde borne du commutateur est reliée au pôle négatif de l'élément de stockage, l'anode de la diode est reliée à ladite première borne du commutateur et la cathode de la diode est reliée au pôle positif de l'élément de stockage, qui est le suivant en direction du plus dans le branchement en série des éléments de stockage.

3. Dispositif de stockage d'énergie électrique selon la revendication 2, dans lequel, dans le branchement en série de l'enroulement à isolation galvanique et de l'inductance, l'ordre est inversé de telle manière que l'inductance est relié par sa première borne au pôle positif de l'élément de stockage et la seconde borne de l'enroulement à isolation galvanique est reliée à la première borne du commutateur.

4. Dispositif de stockage d'énergie électrique selon l'une des revendications précédentes, dans lequel, pour un élément de stockage (C3) supérieur, qui est relié au pôle positif de l'accumulateur d'énergie (1), l'inductance (L3) est réalisée sous la forme d'une bobine d'accumulation dotée de deux enroulements de préférence identiques, le premier enroulement de ladite bobine d'accumulation étant disposé entre l'enroulement (Tr3) à isolation galvanique du transformateur de symétrisation (3) et le commutateur (T3) électrique, qui sont associés à l'élément de stockage (C3) supérieur, et relié par une borne à l'enroulement à isolation galvanique et par l'autre borne audit commutateur, tandis que le second enroulement de ladite bobine d'accumulation (L3) conduit en série avec une autre diode (D3) respectivement à la borne positive et négative de l'élément de stockage (C1), qui est relié à la borne négative du bloc de stockage (1), la cathode de cette diode (D3) pointant vers le pôle positif de l'élément de stockage (C1) relié à la borne négative.

5. Dispositif de stockage d'énergie électrique selon l'une des revendications précédentes, dans lequel les commutateurs électriques (T1, T2, T3) sont réalisés sous la forme de transistors.

6. Dispositif de stockage d'énergie électrique selon l'une des revendications précédentes, dans lequel les commutateurs électriques (T1, T2, T3) sont réalisés sous la forme de transistors MOSFET ou IGBT.

7. Dispositif de stockage d'énergie électrique selon l'une des revendications précédentes, dans lequel les commutateurs électriques (T1, T2, T3) sont réalisés sous la forme de transistors bipolaires NPN avec une diode antiparallèle.

8. Dispositif de stockage d'énergie électrique selon l'une des revendications précédentes, dans lequel, pour tous les commutateurs (T1, T2, T3) électriques, une commande uniforme par uniquement un unique circuit de commande sous la forme d'un circuit d'émetteur d'impulsions (5) est prévue pour la commande de tous les commutateurs (T1, T2, T3) électriques.

9. Dispositif de stockage d'énergie électrique selon l'une des revendications précédentes, dans lequel la commande des commutateurs (T1, T2, T3) électriques est séparée galvaniquement des éléments de stockage (C1, C2, C3) par un transformateur de grille et/ou par des circuits de photocoupleur.

10. Dispositif de stockage d'énergie électrique selon l'une des revendications précédentes, dans lequel le transformateur de symétrisation (3) comprend un noyau de transformateur (4), autour duquel des spires d'un câble plat sont enroulées, dont les conducteurs forment des enroulements (Tr1, Tr2, Tr3) séparés sur le transformateur de symétrisation (3), le câble plat étant relié et connecté au moyen de connecteurs pour câble plat sur une carte de circuits imprimés, qui comporte d'autres composants d'équilibrage du circuit d'équilibrage (2), le transformateur de symétrisation (3) comportant plusieurs enroulements avec des câbles plats.

11. Dispositif de stockage d'énergie électrique selon l'une des revendications précédentes, dans lequel le noyau de transformateur (4) du transformateur de symétrisation (3) est constitué au moins en partie d'un matériau ferritique à haute perméabilité et/ou au moins en partie de matériaux ferritiques nanocristallins et/ou amorphes.

12. Dispositif de stockage d'énergie électrique selon l'une des revendications précédentes, dans lequel uniquement un commutateur (T1, T2, T3) électrique est associé à chaque élément de stockage (C1, C2, C3) et la commande du circuit d'équilibrage est réalisé sans comparateur ni amplificateur opérationnel du côté des éléments de stockage (C1, C2, C3).

13. Dispositif de stockage d'énergie électrique selon l'une des revendications précédentes, dans lequel le circuit d'équilibrage (2) comprend uniquement ledit un transformateur de symétrisation (3), qui est associé conjointement à tous les éléments de stockage (C1, C2, C3).

14. Dispositif de stockage d'énergie électrique selon l'une des revendications précédentes, dans lequel uniquement une inductance (L1, L2, L3) est associée à chaque élément de stockage (C1, C2, C3) et/ou uniquement une diode (D1, D2, D3) est prévue respectivement pour chaque élément de stockage (C1, C2, C3).
